# EUROPEAN PATENT APPLICATION

(11) **EP 4 456 214 A1**
(43) Date of publication of application: **30.10.2024**
(21) Application number: 23170282.0
(22) Date of filing: 27.04.2023
(51) Int. Cl.: H01M 8/04089, H01M 8/0432, H01M 8/04746

(54) **ELECTROCHEMICAL DEVICE**

(71) Applicant: SolydEra SA, 1400 Yverdon-les-Bains (CH)
(72) Inventor: Wuillemin, Zacharie, 1096 Cully (CH); Waeber, Florian, 1260 Nyon (CH); Cornu, Thierry, 1004 Lausanne (CH); Ouweltjes, Jan Pieter, 1004 Lausanne (CH)
(74) Representative: Hepp Wenger Ryffel AG

(57) **Abstract**

An electrochemical device including:
- at least one electrochemical cell,
- two fluid lines,
- a pre-heating unit for preheating at least one of the fluids before feeding the at least one fluid to the system,
- a load device for electrically loading the at least one electrochemical cell,
- temperature sensors,
- pressure sensors for detecting a pressure and/or a differential pressure,

The device comprises a control management system. The control management system:
- is configured to keep a temperature gradient between the inlet side and the exhaust side of at least one fluid line below a predefined system critical temperature gradient and/or to control a minimum temperature and/or a maximum temperature across the electrochemical device compared with a pre-defined temperature reference; and/or
- is configured to control the differential pressure between the two fluid lines; and/or
- is configured to control the pressure drop of at least one fluid line; and/or
- is configured to control at least one maximum pressure and/or at least one minimum pressure of the fluid in the electrochemical device compared to a pre-defined pressure reference.

## Description

The invention relates to an electrochemical device and a method of controlling the electrochemical device according to the preamble of the independent claims.

Reactant fluid control in electrochemical reactors such as fuel cells is common. There, where it concerns the prevention of failure of parts inside the electrochemical reactor due to pressure differences and/or intermixing of fluids that flow through the reactor, the control of differential pressures of the fluids that flow through the reactor is of importance.

Differential pressures can be tuned passively by means of, for example, diaphragms, liquid, spool valves, elastic tubes, stiff separation walls disposed between bellows, or expanding / contracting bodies that communicate with one or both reactant lines. An advantage of such passive control is that, in principle, it does not require any control logic. A potential downside is that this inherently minimizes the differential pressure between the reactants, which for some applications may not be feasible or preferred. This is why in particular applications the differential pressure is actively controlled, for example by means of controllable valves combined with pressure gauges and certain control logic.

JP 2002-373682 A mentions differential pressure control in a fuel cell system by means of a regulator that acts on the differential pressure between the fuel and oxidant feed lines.

In addition, JP 4,606,038 B2 discloses the usage of a controllable oxidant exhaust valve, in order to maintain underpressure of the oxidant at the exhaust side. A similar approach is disclosed in EP 2,108,199 B1.

A particular situation where exhaust differential pressure control is preferred is when exhaust streams are being used for recycling purposes, as disclosed in EP 3,432,399 B1, or sent to devices located downstream the reactor that aim for additional fluid processing, and that create additional pressure drop of the fluid or create suction at the exhaust side of the reactor, as disclosed in US 10,727,508 B2, EP 3,841,635 A1 and US 2021/399318 A1.

It has further been recognized that feedback from the stack may help to improve the differential pressure control. EP 2,075,866 B1 mentions about improved accuracy of the differential pressure based on feedback from the stack voltage and feedback from a leakage determination unit. A similar approach is followed in JP 5,231,847 B2 and EP 3,432,399 B1.

Furthermore, DE 10 2008 0107 11 B4 discloses a method to control the differential pressure of the reactant feed lines combined with control of the respective mass flows, using control logic such that the pressure of the fuel-bearing fluid and the oxygen-bearing fluid are coupled, and a change in the mass flow of at least one of the gases exerts no influence on the gas pressure of this gas.

The above-described solutions would often suffice for electrochemical reactors that operate at low temperature. In contrast, electrochemical reactors that operate at high temperature, such as those based on solid oxide electrochemical cells, also depend on reactant control for keeping thermal gradients in the electrochemical reactor within acceptable limits. This can be achieved by preheating at least one of the fluids that are supplied to the reactor. For example, it can be done by preheating the oxygen-bearing fluid. In reactors that aim for producing electric power from fuel, this oxygen-bearing fluid provides oxidant to electrochemically oxidize the fuel-bearing fluid. In reactors that use electric power to produce fuel-bearing fluid, oxygen-bearing fluid is often used as a sweep gas, for example to remove oxygen gas that is formed at the oxygen electrode.

Information on how thermal gradients act on thermal stress in high-temperature electrochemical stacks can, for example, be found in WO 2021/083625 A1. From that it follows that in particular materials that experience tensile stresses are at risk.

For reactors adopting solid oxide cells, temperature gradients of 5 to 10 °C/cm have been reported in literature. Exceeding these temperature limits could, due to the thermomechanical nature of the electroceramics used in such cells, lead to mechanical failure. The difficulty in safeguarding the temperature limits lies in the fact that those temperature gradients could exist anywhere in the cell, whilst control strategies often rely on information from a limited number of sensors, that are typically placed outside the reactor and not in the reactor itself.

Accurate reactant and heat control in high-temperature reactors get even further complicated when the system is in transient from one operating condition to another operating condition, whilst the electrical efficiency, thermal efficiency, reactant conversion rates or electric losses associated with moving the fluids through the reactor are to be kept optimal during the transient.

Another complication occurs when the electrolyte layers that are used in high-temperature electrochemical reactors are not fully gas tight. This may be the case when low-cost, easy to scale up manufacturing techniques are used and reject rates are kept low.

In case crossover of oxygen-bearing fluid towards fuel-bearing fluid takes place, two problems would be encountered.

Firstly, the presence of oxygen in the fuel-bearing fluid could irreversibly degrade the electrocatalyst that takes care of the electrochemical conversion reactions that take place in the fuel-bearing fluid, as well as catalyst located inside the electrochemical cell that is involved in gas conversion reactions such as reforming reactions or the water-gas shift reaction.

Secondly, the presence of oxygen in the fuel-bearing fluid could negatively affect the quality of the fuel-bearing fluid that leaves the electrochemical cell. This concerns not only the introduction of oxidant in the fuel-bearing fluid, which may lead to irreversible damage of the fuel electrode, but also the introduction of other chemical elements that exist in the oxygen-bearing fluid, such as nitrogen in case air is used. Alteration of the fuel-bearing fluid due to mixing with oxygen-bearing fluid is particularly undesirable in case high system efficiency is aimed for, for example if the exhaust stream of the fuel-bearing fluid is being recycled to the cell inlet, or when there are specific requirements with respect to the chemical composition of the exhaust stream of the fuel-bearing fluid, for example if it is being processed in electrochemical cells located downstream the electrochemical cell, for example hydrogen purification cells or hydrogen pressurization cells, or if it is used in catalytic reactors, for example for the production of ammonia from a nitrogen stream and a hydrogen stream.

A control strategy that deals with all the above-mentioned problems has not been suggested so far.

It is therefore at least one objective of the present invention to overcome the limitations of the prior art. It is at least one objective to provide an electrochemical device with an improved reactant flow and temperature control. It is another objective of the present invention to provide a method of controlling an electrochemical device.

The objectives are solved by the subject-matters of the independent claims. Preferred embodiments are described with regard to the dependent claims.

A first aspect of the invention refers to an electrochemical device including:
- at least one electrochemical cell comprising an anode, a cathode, and a membrane,
- two fluid lines comprising a fuel-bearing line and an oxygen-bearing line, wherein each line comprises an inlet side for feeding fluids to the system and an exhaust side for removing processed fluids from the system,
- a pre-heating unit for preheating at least one of the fluids before feeding the at least one fluid to the system,
- a load device for electrically loading the at least one electrochemical cell,
- temperature sensors for detecting at least one of the fluids inlet temperature and outlet temperature,
- pressure sensors for detecting a pressure and/or a differential pressure, in particular the maximum pressure or the minimum pressure compared to a preferably known reference pressure.

The device also comprises a control management system.

The control management system is configured to keep a temperature gradient between the inlet side and the exhaust side of at least one fluid line below a predefined system critical temperature gradient and/or to control a minimum temperature and/or a maximum temperature across the electrochemical device compared with a pre-defined temperature reference.

The term "critical temperature" refers to a temperature that could lead to damage or mechanical failure of the device during prolonged operation, and may be a device-specific temperature.

The control management system can also be configured to keep a temperature gradient between the inlet and the exhaust side of both fluid lines below a predefined critical temperature.

Additionally or alternatively, the control management system is configured to control a differential pressure between the two fluid lines such that the fuel-bearing line is in overpressure relative to the oxygen-bearing line. The pressure can thus be controlled over the membrane of the cell. The differential pressure is preferably kept between pre-set boundaries, for example between 2 mbar and 30 mbar, where the pressure of the fuel-bearing fluid is in overpressure relative to the pressure of the oxygen-bearing fluid.

Further additionally or alternatively, the control management system is configured to control the pressure drop of at least one fluid line within the electrochemical reactor, preferably both fluid lines, such that the pressure at the inlet side is higher than the pressure at the exhaust side and preferably the pressure drop of at least one fluid is kept between pre-set boundaries. The pre-set boundaries are preferably in the range between 0 and 650 mbar. This way, the losses associated with moving the fluid through the electrochemical reactor are kept within acceptable limits.

The term "pressure drop" can also refer to "pressure differential between the fluid inlet side and fluid exhaust side" and should be distinguished from the pressure differential between two fluid lines.

Even further additionally or alternatively, the control management is configured to control at least one maximum pressure and/or at least one minimum pressure of a fluid in the electrochemical device compared to a pre-defined pressure reference. The pre-defined pressure reference can be ambient pressure, for example standard pressure of 1 bar. The pre-defined pressure may also be a pressure in a vessel of the device. Preferably, the at least one maximum pressure and/or at least one minimum pressure is kept between pre-set boundaries. The minimum pressure, for example, can be higher than 1 bar if the reference pressure is standard pressure of 1 bar. The maximum pressure can, for example, be set to a level where the reactor the reactor can be operated safely, or does not impose operational hazards to its circumference, for example 5 bar.

The above-described device is particularly useful if the fuel-bearing fluid that leaves the electrochemical cell is being processed further downstream or is being recycled towards the inlet of the electrochemical reactor.

The term fluid refers to either liquids or gases, but in particular gases. The fluid can function as reactant for fuel production. The fluid may also be sweep gas that removes emerging oxygen from the system, for example in the case of a solid oxide electrolyzer.

The oxidant-bearing line may contain oxygen besides other components. For example, the oxidant bearing line may contain air. The fuel-bearing line may contain fuel gases such as hydrogen or carbon monoxide, besides other gases such as steam or carbon dioxide.

The control management system can be configured to prioritize differential pressure and/or maximum pressure and/or minimum pressure limits inside the device over temperature gradient limits such that a temperature gradient limit is exceedable.

For example, the temperature gradient within the electrochemical reactor is preferably kept below 75 _{°}C. The risk of failure of components inside the electrochemical reactor is thus low by model calculations that consider the calculation of local temperatures as function of the anticipated maximum electrolyte defect size throughout the operational lifetime as function of the local differential pressure between both reactant flows, supported by experimental observations. The temperature gradients within the electrochemical reactor are within an acceptable range to prevent detrimental failure of the electrochemical cells. In case the temperature gradient exceeds this limit in order to respect the differential pressure limits, the temperature gradient may increase to, for example, 100 _{°}C, at which point a corrective measure needs to take place until the temperature gradient is at maximum 75_{°}C, whilst a limit for a pressure differential is kept. The maximum temperature limit can be 100 °C during a temporary overshoot. So, for the given case, the optimal is 75°C as explained above, allowing an overshoot of 25 °C.

It was surprisingly found that in cases where the temperature gradient limits are exceeded in favor of respecting differential pressure limits, the system can be operated more safely, and irreversible degradation of device components is effectively prevented.

A device that adopts the proposed control scheme could include the following items.

The device can comprise at least one flow controller disposed in at least one fluid line. The flow controller is connected or connectable to the control management system for controlling the mass flow of the fluid. A flow controller may be disposed in all fluid lines to control the mass flow of all fluids.

Alternatively or additionally, the device can comprise pressure sensors to measure the pressure in the fluid lines, or differential pressure sensors to measure the differential pressure between the fluid lines, or pressure sensors to measure the pressure in the fluid line relative to the ambient pressure.

Alternatively or additionally, the device can comprise temperature sensors to measure the temperature of at least one of the fluids.

Alternatively or additionally, the device can comprise sensors to analyze the composition of at least one of the fluids that enters or leaves the reactor.

Being equipped with a sufficient number of sensors, the device can be adequately controlled by, for example, one or more hysteresis loops. Such hysteresis loops could work independently, in sequence, or in a cascaded fashion, where one hysteresis loop receives feedback from another hysteresis loop.

Advantageously, an operational mass flow and a preheat-temperature of the fluid are based on lookup tables; or are based on thermodynamic models, such as electrochemical, thermomechanical models, calculating a heat balance depending on the imposed operating conditions; or is based on real-time optimization routines or a data-driven model. This will allow for a reduction of the number of sensors that are required to control pressures and differential pressures inside the electrochemical reactor.

For example, data relating to the current state of the system can be obtained from sensors, the data can then be correlated to look up table or models and the operational mass flow and the preheat-temperature can be adjusted in order to ensure safe working of the electrochemical device.

In operation, the pressure drop in an electrochemical reactor with planar electrochemical cells is directly proportional to the mass flow rate and the kinematic viscosity, i.e. the fluid's internal resistance to flow under gravitational forces, of the fluid, the latter being proportional to the pressure and proportional to the absolute temperature to the power 3/2, and dependent on the fluid composition. Based on this relationship, one or more lookup tables can be constructed, from which a targeted operational mass flow and a preheat-temperature of the fluid can be determined. The accuracy of the at least one lookup table is dependent on the level of detail that is included in the calculations. For example, in a simplified state, the at least one lookup table could rely on measured pressures and temperatures at the inlet side and the exhaust side of the electrochemical stack. In a more advanced state, the at least one lookup table could for example be based on the average mass flow rate, pressure and temperature that exist inside the electrochemical reactor, which depend on the operational state of the reactor, e.g. the conversion rates of the fluids due to the electrochemical reactions that take place during operation, the Joule heat associated with these electrochemical reactions, the heat capacity of the solid materials in the electrochemical stack, the specific heat capacity of the fluids, and the change in the fluid composition from the inlet side to the exhaust side.

Advantageously, an operational mass flow and a preheat-temperature of the fluid are based on electrochemical or thermomechanical model. Using the operational data imposed to the electrochemical reactor and data feedback from the electrochemical reactor, such models allow for calculating the distribution of the fluids, their associated compositions and pressures, the distribution of the temperatures within the electrochemical reactor, and the associated thermomechanical stress in the materials. This allows for accurate assessment of the pressures, differential pressures, and temperatures within the electrochemical reactor, by which the operational limits can be more accurately be guarded.

Advantageously, the operational mass flow and the preheat-temperature are based on real-time optimization routines. Particularly an approach that employs a dynamic model and constraint adaptation appears to be practical for real-time control.

Advantageously, the operational mass flow and the preheat-temperature is based on a data-driven model, such as an artificial neural network that, once trained with input and output data from a physical model or from previous experimental research, is able to estimate the output of the device depending on the actual input data without the need of a physical equation.

In order to predict the performance of the device under conditions where a temperature gradient limit is exceeded whilst respecting the limits for differential pressure, the device can be trained with data from a physical model that is able to accurately predict the behaviour of the device under such conditions, or can be trained with data previously obtained with a representative device that was tested under such conditions.

In operation, the pressure drop in an electrochemical reactor can be directly correlated to the mass flow rate and a kinematic viscosity of the fluid. For example, the pressure drop can be proportional to the mass flow rate and a kinematic viscosity of the fluid, or may change dis-proportional.

It should further be understood that the extent to which the number of sensors can be reduced by using advanced controlling methods depends on a case-by-case basis.

It should be understood that even with advanced monitoring and control routines, events can occur during the operation of the device that alter the response of the reactor, and that need to be manually supervised.

Preferably, the electrochemical cell is an electrolyser cell or a fuel cell. The electrochemical cell can be a proton exchange membrane cell, a solid oxide cell, an alkaline cell or a molten-carbonate cell. More preferably, the electrochemical cell is a cell that operates at elevated temperature, such as a solid oxide cell or a molten-carbonate cell. Even more preferably, the electrochemical reactor that adopts one or more electrochemical cells is a reactor that allows for adoption of cells with electrolyte that is not fully gas-tight, such as a solid oxide cell with thin electrolyte, for example thinner than 20 micrometer, or cells with electrolyte that is prone to mechanical failure.

A pressure control valve can be disposed within the at least one fluid line, preferably prior to or after the electrochemical reactor. A pressure control valve can also be disposed within both fluid lines. Pressure control valves can additionally help or backup a reliable working of the pressure control.

For example, controllable backpressure valves can be disposed in one of the fluid lines at the exhaust side or the electrochemical reactor. In this case, the pressure of the involved fluid is controlled depending on the pressure drop across the electrochemical reactor.

The oxygen-bearing line can contain an oxygen-bearing gas, preferably air. Preferably, the line can be supplied with oxygen bearing gas.

The invention is by no means limited to the above description but could be used in different configurations as well. For example, systems that use the preferred control scheme could be designed where electrochemical cells are classified based on their leak tightness or propensity to electrolyte mechanical failure, where those cells or cell classes that express the lowest gas tightness or highest failure risk are used where, for example, the risk of nickel oxidation or oxygen electrode degradation is the lowest. Such configurations are possible in, for example, systems with stacks that operate in cascade, systems with stacks that are operated at different temperatures, or stacks where more than one electrochemical cell, for example 2 or 4 cells, are integrated in each stack repeating element.

A second aspect of the invention refers to a method of controlling an electrochemical device as previously described. The method comprising the steps of:
a) Preheating at least one fluid,
b) Feeding the at least one fluid to an electrochemical cell, preferably two fluids,
c) Measuring an inlet temperature of the fluid at an inlet side of at least one fluid line and an outlet temperature of the fluid at an exhaust side of the at least one fluid line and keeping a resulting temperature gradient below a predefined critical temperature gradient and/or controlling a minimum temperature and/or a maximum temperature in the electrochemical device compared to a pre-defined temperature or temperature gradient reference.

Additionally or alternatively to step c), the method can comprise step d):
d) Measuring the differential pressure between a fuel-bearing line and an oxygen-bearing line and adjusting the differential pressure such that the fuel-bearing line is in overpressure to the oxygen-bearing line.

Additionally or alternatively to step c) and/or d), the method can comprise step e):
e) Measuring the pressure drop of at least one fluid line across the electrochemical reactor, wherein the pressure drop is adjusted to keep the pressure at the inlet side higher than the pressure at the exhaust side, and/or measuring the maximum and/or minimum pressure across the electrochemical cell compared to a pre-defined pressure reference and adjusting the pressure to predefined boundaries.

The term pressure reference can refer to the ambient pressure surrounding the device. Alternatively, the pressure reference can be the pressure in a vessel of the device or a pressure in another component, fluid line or pipe, of the device.

The method allows controlling a proper functioning of the device, failures due to exceeded pressure are drastically reduced.

The method may work for an electrochemical cell where the cell is a fuel cell. The method is also applicable to cells or electrochemical reactors where the polarity is reversed, where fuel is produced by means of electric power, or any other operation that involves conversion of fluids and in particular reactants where intermixing should be kept as low as possible.

Advantageously, at least one of the steps a) to e), preferably one of steps c) to d), is followed by: Determining a pressure drop within a fluid line and/or between fluid lines and/or maximum pressure and/or minimum pressure limits and temperature gradient limits and prioritizing the differential pressure limit such that the temperature gradient limit that is typical for steady-state operation is exceeded.

For example, the maximum temperature gradient limit is 100°C during a temporary overshoot. Thus, the optimal temperature gradient limit is 75°C, allowing an overshoot of 25 °C.

During a steady-state operation the differential pressure can be changed in order to respect a temperature gradient limit for the steady-state operation.

The temperature gradient can be kept below the defined system temperature gradient by controlling a mass flow and pre-heat temperature of the at least one fluid, in relation to the heat balance within the reactor.

Preferably, an operational mass flow and preheating of the at least one fluid are based on lookup tables, or are based on thermodynamic models calculating a heat balance depending on the imposed operating conditions, or are based on real-time optimization routines or are based on a data driven model.

Under operation, the pressure drop in an electrochemical reactor can be directly correlated to the mass flow rate and a kinematic viscosity of the fluid.

A third aspect of the invention refers to a use of an electrochemical system as previously described for power and/or reactant and/or heat production.

The invention is explained in more detail based on the following figures and graphs, describing the case of a solid oxide electrolyzer that is operated with air and hydrogen-steam mixture, in case a defect of 10 microns is present in the electrolyte. The figures and graphs are not to be understood as limiting. It shows:
- Figure 1A:: Hydrogen partial pressure at the reactor inlet in case of 20 mbar fuel overpressure in the assessment of risk of nickel oxidation.
- Figure 1B:: Hydrogen partial pressure at the reactor inlet at 0 mbar differential pressure in the assessment of risk of nickel oxidation.
- Figure 1C:: Hydrogen partial pressure at the reactor inlet at 20 mbar air overpressure in the assessment of risk of nickel oxidation.
- Figure 2A:: Oxygen partial pressure at the outlet at 20 mbar fuel overpressure in the assessment of risk of oxygen electrode reduction.
- Figure 2B:: Oxygen partial pressure at the outlet at equal 0 mbar pressure.
- Figure 2C:: Oxygen partial pressure at the outlet at 20 mbar air overpressure in the assessment of risk of oxygen electrode reduction.
- Figure 3A:: Steam concentration at the outlet at 20 mbar fuel overpressure.
- Figure 3B:: Steam concentration at the outlet at equal 0 mbar pressure.
- Figure 4A:: Effect of gas crossover combined with the differential pressure of +20 mbar on the temperature at the outlet.
- Figure 4B:: Effect of gas crossover combined with the differential pressure of -20 mbar on the temperature at the outlet.
- Figure 5A:: Electric current flowing through an electrochemical reactor.
- Figure 5B:: Temperature difference in the electrochemical reactor.
- Figure 5C:: Process air flow that is supplied to the electrochemical reactor.
- Figure 5D:: Pressure differential between the fuel electrode and the oxygen electrode, where positive numbers indicate that fuel is in overpressure relative to air, and negative numbers indicate that air is in overpressure relative to fuel.

In order to illustrate the impact of differential pressure in a high-temperature electrochemical single cell or stack using solid oxide cells, 2D model calculations were performed to assess the effect of differential pressure on the risk of fuel electrode oxidation and on the temperature distribution. Input for the model were experimentally obtained leakage rate data on a fuel electrode/electrolyte half-cell of which the fuel electrode was pre-reduced to obtain an electrode with metallic nickel, and information from materials analysis to assess the size of the defects that were responsible for the leakage as well as the porosity and tortuosity of the fuel electrode (4) and oxygen electrode (3). The model further took Stefan-Maxwell diffusion and Knudsen diffusion into account to estimate the flow rate through pinholes and through the gas distribution through the porous layers, as well as the associated temperature distribution within the porous structures (2).

In the analysis, differential pressures between +20 mbar (fuel electrode in overpressure) and -20 mbar (oxygen electrode in overpressure), and defect sizes of the membrane (1) ranging from 1 micron to 10 micron were considered.

### a) Risk of nickel oxidation

In order to assess the risk of nickel oxidation, reactant flows with a temperature of 770 °C, using a fuel electrode (4) feed of 10% hydrogen and 90% steam, and an oxygen electrode (3) feed of air were considered in the vicinity of a defect (2) in the electrolyte (1), where fluid may cross over from one electrode to the other. This is considered one of the most extreme cases for nickel oxidation, as the fuel electrode fluid contains only 10% of hydrogen.

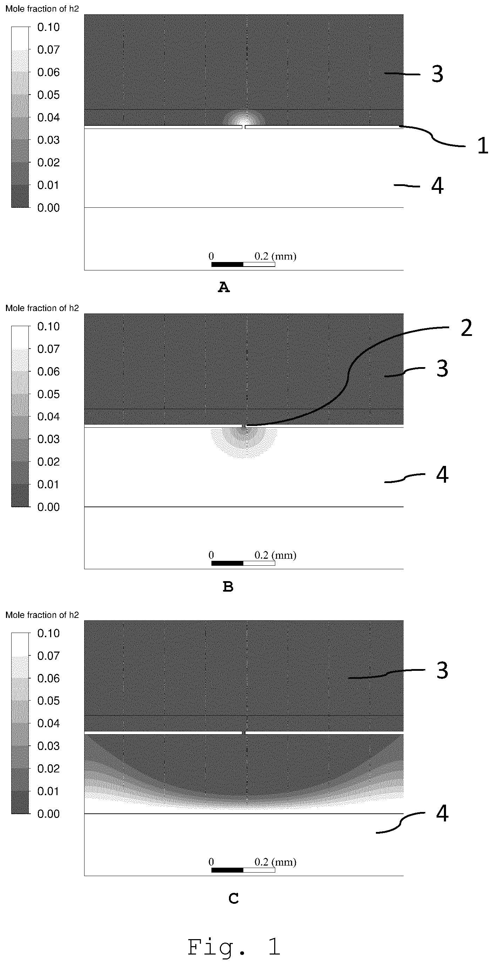

In figure 1, the hydrogen concentration is shown, ranging from 10% hydrogen, 7% hydrogen, 1% hydrogen to 0% hydrogen, for a defect size (2) of 10 microns. A scale for the hydrogen amount is provided on the side of each figure corresponding to the above mentioned percentages. It can be seen that at +20 mbar differential pressure (figure 1A), fuel flows to the oxygen electrode (3) (top side of each graph). At 0 mbar differential pressure (figure 1B), air diffuses towards the fuel electrode (4). At -20 mbar differential pressure (figure 1C, the oxygen electrode is at overpressure) air flows towards the fuel electrode (4), where in a considerable area the risk of nickel oxidation is high. An indication for the area that is at risk is marked by a hydrogen concentration in the fuel-air mixture with around 1 vol%, but even beyond that (down to a hydrogen concentration of 1 ppmv) nickel oxidation could occur.

Table 1 summarizes the area where nickel oxidation may occur for all considered cases, estimating the area directly adjacent to the electrolyte, where air penetrates the farthest, as a function of the differential pressure for different defect sizes. The affected area was estimated by means of an isobar that is marking a hydrogen partial pressure of 3 vol% (used images not shown), within which the hydrogen partial pressure drops below this value due to the cross-over of air. From Table 1 it can be seen that the fuel electrode is at risk both at -10 and -20 mbar differential pressure (air in overpressure), but only for defect sizes greater than 2 microns. At equal pressure and at 1 mbar fuel overpressure, there is a small risk of anode oxidation for the largest defect size of 10 micron. For smaller defects, and for higher fuel overpressures, there is no risk of nickel oxidation.

**TABLE 1:**

| P_{diff} | 10 µm | 5 µm | 4 µm | 2 µm | 1 µm |
|---|---|---|---|---|---|
| -20 mbar | 0.85 | 0.68 | 0.53 | 0.10 | - |
| -10 mbar | 0.67 | 0.41 | 0.29 | - | - |
| 0 mbar | 0.02 | - | - | - | - |
| +1 mbar | 0.02 | - | - | - | - |
| +5 mbar | - | - | - | - | - |
| +20 mbar | - | - | - | - | - |

The effect of the gas crossover for the most extreme cases (largest defect of 10 micron) combined with the largest differential pressures of -20 and + 20 mbar on the temperature revealed that the temperature increases the most in the case of air crossover towards the fuel electrode, with a maximum temperature difference for the considered frame of 13 °C.

### b) Risk of oxygen electrode reduction

In order to assess the risk of oxygen electrode reduction at a reactor temperature of 770 _{°}C, with a hydrogen-steam mixture supplied to the fuel electrode (4) and air to the oxygen electrode (2), were considered in the vicinity of a defect (2) in the electrolyte (1), where fluid may cross over from one electrode to the other. It is assumed that the hydrogen-steam mixture has been converted to a mixture of 90% hydrogen and 10% steam due to the electrochemical conversion of steam to hydrogen. This is considered one of the most extreme cases for oxygen electrode reduction, as the fuel electrode fluid contains 90% of hydrogen.

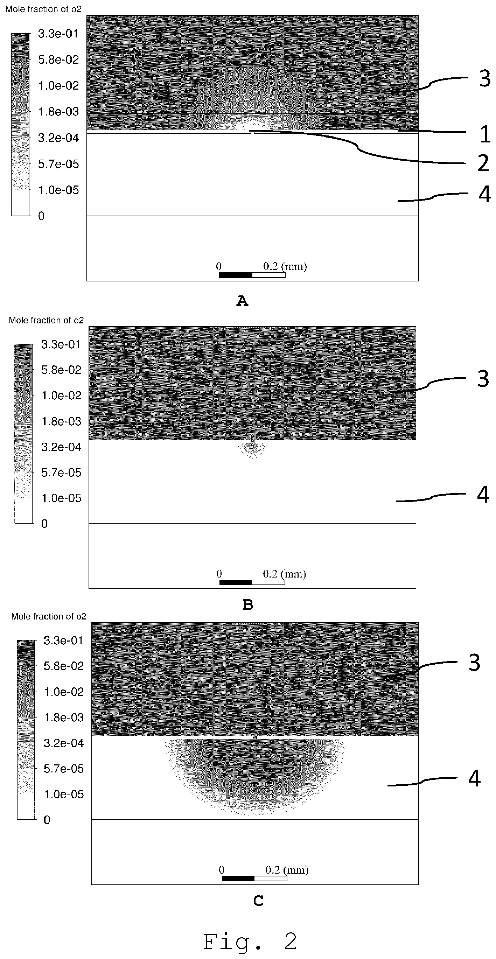

In figure 2, the oxygen concentration is shown, again for a defect size (2) of 10 microns. It can be seen that at 20 mbar fuel overpressure (+20 mbar, figure 2A), fuel flows to the oxygen electrode (3), causing a drop in the oxygen partial pressure. At equal pressure (0 mbar, figure 2B), still some fuel diffuses to the oxygen electrode (3) as well as some air diffuses towards the fuel electrode. At 20 mbar air overpressure (-20 mbar, figure 2C), air flows to the fuel electrode (4).

Table 2 summarizes the area where oxygen electrode reduction may occur for all considered cases, estimating the area directly adjacent to the electrolyte, where fuel penetrates the farthest, as a function of the differential pressure for different defect sizes. The affected area was estimated by using graphs that indicates the area where the partial oxygen pressure is below 10E-5 atm, which is considered a boundary beyond which many mixed conducting perovskites that are used in oxygen electrodes for solid oxide cells, for example LSCF, become irreversibly unstable. From the table 2, it can be determined that the oxygen electrode is at risk at +20 mbar differential pressure, but only for a defect size of 10 microns. For smaller defects, and at lower fuel overpressures, there is no risk of oxygen electrode reduction.

**TABLE 2:**

| P_{diff} | 10 µm | 5 µm | 4 µm | 2 µm | 1 µm |
|---|---|---|---|---|---|
| -20 mbar | - | - | - | - | - |
| -10 mbar | - | - | - | - | - |
| 0 mbar | - | - | - | - | - |
| +1 mbar | - | - | - | - | - |
| +5 mbar | - | - | - | - | - |
| +20 mbar | 0.06 | - | - | - | - |

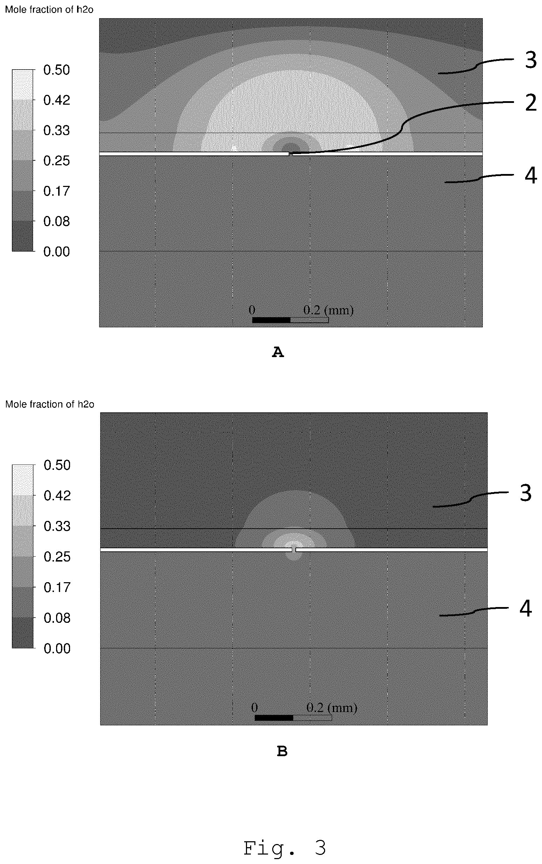

In figure 3, the steam concentration is shown, again for a defect size (2) of 10 microns. It can be seen that at 20 mbar fuel overpressure (+20 mbar, figure 3A), steam concentrations up to 45% are present due to the flow of hydrogen-steam mixture to the oxygen electrode (3), where steam is formed due to combustion of hydrogen and due to the crossover from the fuel side. At equal pressure (0 mbar, figure 3B), fuel diffuses to the oxygen electrode (3), but the concentrations of steam at the oxygen electrode (3) are lower.

The presence of steam at the oxygen electrode has been reported to cause instability of typical oxygen electrode materials such as LSCF, where it might, for example, play a role in the exsolution of strontium cations. It is however unlikely that steam destabilizes the oxygen electrode to an extent that it would make it dysfunctional.

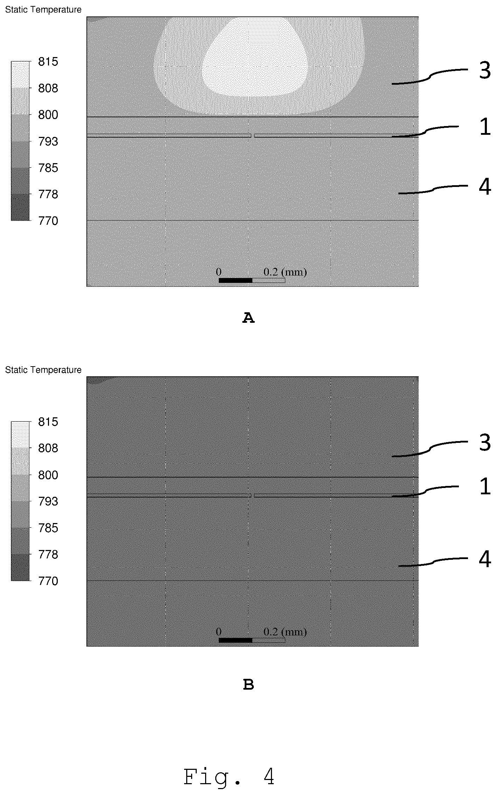

The effect of the gas crossover for the most extreme cases (largest defect of 10 micron at the outlet of the electrolyzer) combined with largest differential pressures of +20 mbar (figure 4A) and -20 mbar (figure 4B) on the temperature is shown in figure 4. From that it follows that the temperature increases the most for fuel crossover towards the oxygen electrode (3), with a maximum temperature increase over the nominal temperature of 770°C for the considered frame of 43°C. This is considerably higher than the temperature differences seen at the electrolyzer inlet and marks the relevance of defects in locally large temperature gradients.

Table 3 summarizes the temperature overshoot in °C in the vicinity of a defect for all considered differential pressures. It can be seen that in all cases a temperature increase is observed, where the highest increase is observed for the highest fuel overpressure of +20 mbar and the largest defect size of 10 micron.

**TABLE 3:**

| P_{diff} | 10 µm | 5 µm | 4 µm | 2 µm | 1 µm |
|---|---|---|---|---|---|
| -20 mbar | 11 | 6 | 4 | 2 | 2 |
| -10 mbar | 5 | 3 | 2 | 2 | 2 |
| 0 mbar | 5 | 4 | 4 | 3 | 1 |
| +1 mbar | 6 | 5 | 4 | 3 | 1 |
| +5 mbar | 13 | 8 | 6 | 3 | 1 |
| +20 mbar | 43 | 21 | 15 | 5 | 2 |

The above findings, together with experimental observations from a solid oxide reactor where fuel overpressures up to 20 mbar were applied at an operating temperature around 750 °C, led to the assumption that, when in operation, solid oxide stacks are perhaps more forgiving towards temperature gradients than generally understood from thermal cycling experiments between operating temperature and ambient temperature. And resultingly, it has been suggested by inventors and then experimentally verified if a control scheme would be possible where temperature control is of less priority than differential pressure control, that would alleviate competition between temperature control and reactant control, by allowing the reactor to overshoot temperature gradient limits that are typical for steady-state operation during system transients while keeping the system performance optimal. This brings along an advantage, as the operability of the device improves.

### c) Application of the invention

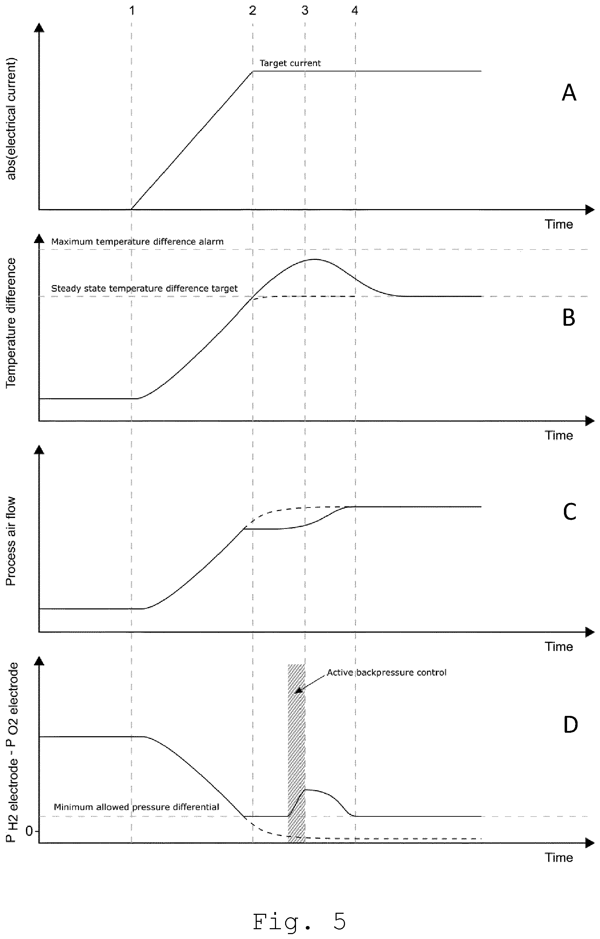

The four graphs in figures 5 illustrate how the control strategy could be used in practice. From top to bottom, the following parameters are shown for a particular timeframe during the operation of an electrochemical reactor:
- Electric current flowing through the electrochemical reactor (fuel cell mode or electrolysis mode) (figure 5A),
- Temperature difference in the electrochemical reactor, for example the difference between the temperature of an exiting fluid and the temperature of an ingoing fluid (figure 5B),
- Process air flow rate that is supplied to the electrochemical reactor (Figure 5C),
- Pressure differential between the fuel electrode and the oxygen electrode, where positive numbers indicate that fuel is in overpressure relative to air, and negative numbers indicate that air is in overpressure relative to fuel (Figure 5D).

The control strategy is further elucidated by the four graphs. These graphs consider two cases. First, it will be explained how the reactor would respond without prioritising the pressure differential over temperature. This is shown by the curve that, upon reaching the second vertically dashed line, becomes dashed.

Next, it will be explained how the reactor will respond when pressure differential is prioritised over temperature. This is shown by the curve that, upon reaching the second or third vertically dashed line, remains continuous.

Considering the first case, with the assumption that the feed to the fuel electrode and the feed to the oxygen electrode and their associated temperatures are constant, it can be seen how the reactor will respond upon increasing the electric current that flows through the reactor from a first setpoint to the new setpoint. This is marked by the vertically dashed lines 1 and 2.

In the temperature graph 5B, it can be determined that the temperature of the reactor will rise, as more heat is being generated in the reactor. The heat evolution in the reactor follows shortly after the current increase due to the thermal inertia of the reactor.

With the aim to limit the temperature increase in the reactor, the air flow shown in the third graph 5C is increased by means of a feedback loop that responds to the reactor temperature. Consequently, the air pressure will increase, causing a drop in the pressure differential, which drives towards a state where air is in overpressure of fuel (i.e. the pressure differential drops).

Upon reaching the new current setpoint (vertically dashed line 2), the temperature of the reactor will level off, as the air flow is allowed to increase freely until it stabilizes (marked by vertically dashed line 3) and, consequently, will cause a further decrease of the pressure differential below a minimum allowed pressure differential.

Considering the second case, which discloses the proposed control scheme, the air flow is throttled at the point where the pressure differential reaches the minimum allowed pressure differential (in the graph this point is reached just before vertically dashed line 2), or at a safe margin above the minimum allowed pressure differential (not shown). This causes a temperature overshoot.

In order to correct the reactor temperature, the pressure differential is then increased by means of adjusting the back pressure to a value that will allow for a safe increase of the air flow, and the air flow is no longer throttled (marked by the shaded beam). It can be determined that the air flow increases further to let the reactor temperature arrive at a safe steady-state temperature. The increased air flow will once again cause a drop of the pressure differential, but now to a level that is still respecting a minimum allowed pressure differential (shown in the graph upon reaching vertically dashed line 4) or arrives at a value that keeps a safe margin above the minimum allowed pressure differential (not shown).

## Claims

1. An electrochemical device including:
- at least one electrochemical cell comprising an anode, a cathode, and a membrane,
- two fluid lines comprising a fuel-bearing line and an oxygen-bearing line, wherein each line comprises an inlet side for feeding fluids to the system and an exhaust side for removing processed fluids from the system,
- a pre-heating unit for preheating at least one of the fluids before feeding the at least one fluid to the system,
- a load device for electrically loading the at least one electrochemical cell,
- temperature sensors for detecting at least one of the fluids inlet temperature and outlet temperature,
- pressure sensors for detecting a pressure and/or a differential pressure,
**characterized in that** the device comprises a control management system and wherein the control management system:
- is configured to keep a temperature gradient between the inlet side and the exhaust side of at least one fluid line below a predefined system critical temperature gradient and/or to control a minimum temperature and/or a maximum temperature across the electrochemical device compared with a pre-defined temperature reference; and/or
- is configured to control the differential pressure between the two fluid lines such that the fuel-bearing line is in overpressure relative to the oxygen-bearing line; and/or
- is configured to control the pressure drop of at least one fluid line such that the pressure at the inlet side is higher than the pressure at the exhaust side and preferably the pressure drop of at least one fluid is kept between pre-set boundaries; and/or
- is configured to control at least one maximum pressure and/or at least one minimum pressure of the fluid in the electrochemical device compared to a pre-defined pressure reference and preferably, the at least one maximum pressure and/or at least one minimum pressure is kept between pre-set boundaries.

2. Device according to claim 1, wherein the control management system is further configured to prioritize differential pressure and/or a maximum pressure and/or minimum pressure limits inside the device over temperature gradient limits such that a temperature gradient limit is exceedable.

3. Device according to claim 1 or 2, wherein the device comprises at least one flow controller disposed in at least one fluid line, wherein the flow controller is connected or connectable to the control management system for controlling the mass flow of the fluid.

4. Device according to one of the previous claims, wherein an operational mass flow and a preheat-temperature of the fluid are based on lookup tables; or are based on thermodynamic models calculating a heat balance depending on the imposed operating conditions; or are based on real-time optimization routines; or a data-driven model.

5. Device according to one of the previous claims, wherein the electrochemical cell is an electrolyser cell or a fuel cell.

6. Device according to one of the previous claims, wherein a pressure control valve is disposed prior to and/or after the electrochemical reactor.

7. Device according to one of the previous claims, wherein the oxygen-bearing line contains an oxygen bearing gas, preferably air.

8. Method of controlling an electrochemical device according to one of claims 1 to 7, comprising the steps of
a) Preheating at least one fluid,
b) Feeding the at least one fluid to an electrochemical cell,
c) Measuring an inlet temperature of the fluid at an inlet side of at least one fluid line and an outlet temperature of the fluid at an exhaust side of the at least one fluid line and keeping a resulting temperature gradient below a predefined critical temperature gradient and/or controlling a minimum temperature and/or a maximum temperature in the electrochemical device compared to a pre-defined temperature or temperature gradient reference; and/or
d) Measuring the differential pressure between a fuel-bearing line and an oxygen-bearing line and adjusting the differential pressure such that the fuel-bearing line is in overpressure to the oxygen-bearing line; and/or
e) Measuring the pressure drop of at least one fluid across the electrochemical reactor, wherein the pressure drop is adjusted to keep the pressure at the inlet side higher than the pressure at the exhaust side, and/or measuring the maximum and/or minimum pressure across the electrochemical cell compared to a pre-defined pressure reference and adjusting the pressure to predefined boundaries.

9. Method according to claim 8, wherein at least one of the steps a) to e) is followed by: Determining a pressure drop within a fluid line and/or between fluid lines and/or maximum pressure and/or minimum pressure limits and temperature gradient limits and prioritizing the differential pressure limit such that the temperature gradient limit is exceedable.

10. Method according to claim 9, wherein the maximum temperature gradient limit is 100°C during a temporary overshoot.

11. Method according to claim 8 to 10, wherein during a steady-state operation a differential pressure is changed in order to respect a temperature gradient limit for the steady-state operation.

12. Method according to one of claims 8 to 11, wherein the temperature gradient is kept below the defined system temperature gradient by controlling a mass flow and pre-heat temperature of the at least one fluid.

13. Method according to claim 12, wherein an operational mass flow and preheating of the at least one fluid are based on lookup tables, or are based on thermodynamic models calculating a heat balance depending on the imposed operating conditions, or are based on real-time optimization routines or are based on a data driven model.

14. Use of an electrochemical system according to one of claims 1 to 7 for power and/or reactant and/or heat production.
